# EUROPEAN PATENT SPECIFICATION

(11) **EP 4 361 564 B1**
(45) Date of publication and mention of the grant of the patent: **23.07.2025**
(21) Application number: 23193286.4
(22) Date of filing: 24.08.2023
(51) Int. Cl.: G01C 21/20, G06N 3/08

(54) **TRAINING A PATH DISTRIBUTION ESTIMATION MODEL**
TRAINIEREN EINES MODELLS ZUR PFADVERTEILUNGSSCHÄTZUNG
ENTRAINER UN MODEL D'ESTIMATION DE DISTRIBUTION DE TRAJETS

(30) Priority: 24.10.2022 KR 20220137473
(43) Date of publication of application: 01.05.2024
(73) Proprietor: Samsung Electronics Co., Ltd., Suwon-si, Gyeonggi-do 16677 (KR)
(72) Inventor: JUNG, Younghwa, 16678 Suwon-si (KR); SHIN, Seho, 16678 Suwon-si (KR)
(74) Representative: Arnold & Siedsma

(56) References cited:
- US-A1- 2019 042 859
- US-A1- 2022 214 692

## Description

### BACKGROUND

### 1. Field

The following description relates to a method and device with path distribution estimation.

### 2. Description of Related Art

Robots for home and industrial use and vehicles may autonomously drive in various places, such as houses, offices, and public places.

An autonomous driving device may preemptively plan a route in order to create a driving route. It has been found that a plan for a path may be established through a sampling-based algorithm, but the sampling-based algorithm may have issues of slow convergence speed, large memory requirements, and delay in a path creation in narrow passages.

US 2019/0042859 A1 discloses examples implementations relating to determining path confidence for a vehicle. US 2022/0214692 A1 discloses the use deep of reinforcement learning (DRL) algorithms and the use of one or more path planning approaches to create a path using a deep learning approach using a reinforcement learning algorithm, trained using traditional learning algorithms such as A-Star.

### SUMMARY

The present invention is set out as defined by the appended set of claims.

In one general aspect, a processor-implemented method includes: generating initial information comprising map information, departure information, and arrival information; generating a plurality of paths by inputting the initial information to a planner ensemble; and training a path distribution estimation model to output a path distribution corresponding to the plurality of paths.

The planner ensemble includes a plurality of planners having different characteristics from each other.

The generating of the plurality of paths includes generating the plurality of paths corresponding to the plurality of planners, respectively, by inputting the initial information to each of the plurality of planners.

The training may include training the path distribution estimation model to minimize a loss function determined based on a difference between the plurality of paths and a test path generated by inputting the initial information to the path distribution estimation model.

The plurality of planners may include a sampling-based planner.

The path distribution estimation model may include a path distribution estimation model based on a generative model.

The map information may include an occupancy grid map, the departure information includes either one or both of departure location information and departure position information, and the arrival information includes either one or both of arrival location information and arrival position information.

In an example, a processor-implemented method includes: generating initial information comprising any one or any combination of any two or more of map information, departure information, and arrival information; generating a path distribution corresponding to the initial information by inputting the initial information to a path distribution estimation model; and determining a final path based on the path distribution.

The determining of the final path may include determining the final path by performing statistical processing on the path distribution.

The determining of the final path may include determining the final path by inputting the path distribution to a sampling-based planner.

The generating of the initial information may include generating the initial information based on sensor data obtained from one or more sensors.

The generating of the initial information may include generating the departure information based on positioning data obtained from a positioning module.

The path distribution estimation model may be a trained model trained by: generating training information comprising any one or any combination of any two or more of training map information, training departure information, and training arrival information; generating a plurality of paths by inputting the training information to a planner ensemble; and training the path distribution estimation model to output a path distribution corresponding to the plurality of paths.

In another general aspect, one or more embodiments include a non-transitory computer-readable storage medium storing instructions that, when executed by one or more processors, configure the one or more processors to perform any one of, any combination of, or all operations and methods described herein.

In another general aspect, an electronic device includes: a processor configured to: generate initial information comprising map information, departure information, and arrival information; generate a plurality of paths by inputting the initial information to a planner ensemble; and train a path distribution estimation model to output a path distribution corresponding to the plurality of paths.

The planner ensemble includes a plurality of planners having different characteristics from each other, and, for the generating of the plurality of paths, the processor may be configured to generate the plurality of paths corresponding to the plurality of planners, respectively, by inputting the initial information to each of the plurality of planners.

For the training, the processor may be configured to train the path distribution estimation model to minimize a loss function determined based on a difference between the plurality of paths and a test path generated by inputting the initial information to the path distribution estimation model.

The plurality of planners may include a sampling-based planner, and the path distribution estimation model may include a path distribution estimation model based on a generative model.

The map information may include an occupancy grid map, the departure information includes either one or both of departure location information and departure position information, and the arrival information includes either one or both of arrival location information and arrival position information.

In another example, an electronic device includes: a processor configured to: generate initial information comprising any one or any combination of any two or more of map information, departure information, and arrival information; generate a path distribution corresponding to the initial information by inputting the initial information to a path distribution estimation model; and determine a final path based on the path distribution.

For the determining of the final path, the processor may be configured to determine the final path by performing statistical processing on the path distribution.

For the determining of the final path, the processor may be configured to determine the final path by inputting the path distribution to a sampling-based planner.

Other features and aspects will be apparent from the following detailed description, the drawings, and the claims.

### BRIEF DESCRIPTION OF THE DRAWINGS

FIG. 1 illustrates an example of a method of generating a path for autonomous driving.
FIG. 2A illustrates an example of a deep learning operation method using an artificial neural network (ANN).
FIG. 2B illustrates an example of a training and inference method of an ANN model.
FIGS. 3A and 3B illustrate an example of a framework generating an autonomous driving path.
FIG. 4 illustrates an example of a method of generating training data using a planner ensemble.
FIG. 5 illustrates an example of a training method of a path distribution estimation model.
FIG. 6 illustrates an example of a method of determining a path.
FIG. 7 illustrates an example of an effect of a method of estimating a path distribution using a planner ensemble.
FIG. 8 illustrates an example of a training method of a path distribution estimation model.
FIG. 9 illustrates an example of a method of estimating a path distribution.
FIG. 10 illustrates an example of a configuration of a training device.
FIG. 11 illustrates an example of a configuration of an inference device.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as being "on", "connected to," "coupled to," or "joined to" another component, element, or layer it may be directly (e.g., in contact with the other component or element) "on", "connected to," "coupled to," or "joined to" the other component, element, or layer or there may reasonably be one or more other components, elements, layers intervening therebetween. When a component or element is described as being "directly on", "directly connected to," "directly coupled to," or "directly joined" to another component or element, there can be no other elements intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms used herein including technical or scientific terms have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application, and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

As used herein, the term "and/or" includes any one and any combination of any two or more of the associated listed items. The phrases "at least one of A, B, and C", "at least one of A, B, or C', and the like are intended to have disjunctive meanings, and these phrases "at least one of A, B, and C", "at least one of A, B, or C', and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The examples may be implemented as various types of products, such as, for example, a personal computer (PC), a laptop computer, a tablet computer, a smartphone, a television (TV), a smart home appliance, an intelligent vehicle, a kiosk, and/or a wearable device. Hereinafter, examples will be described in detail with reference to the accompanying drawings. In the drawings, like reference numerals are used for like elements.

An artificial intelligence (AI) system may be a computer system in which a machine learns and determines by itself and becomes smarter, unlike a typical rule-based smart system. As the AI system is used more, the AI system may have an improved recognition rate and more accurately understand the preference of a user. Thus, the rule-based systems may be replaced with deep learning-based AI systems. While the system may be referred to as an "artificial intelligence system," such reference is not intended to impart any relatedness with respect to how the system computationally maps or thereby intuitively recognizes information and how a biological brain operates. I.e., the term "artificial intelligence system" is merely a term of art referring to the hardware-implemented system.

AI technology may include machine learning (deep learning) and element techniques utilizing the machine learning (deep learning).

Machine learning may use an algorithm to autonomously classify/learn features of input data, and the element techniques may use a machine learning algorithm, such as deep learning, and include technical fields, such as linguistic understanding, visual understanding, inference/prediction, knowledge representation, and motion control.

Linguistic understanding may be a technique of recognizing and applying/processing human language/characters, and may include natural language processing, machine translation, dialogue systems, questions and answers, and/or speech recognition/synthesis. Visual understanding may be a technique of recognizing and processing objects like human vision, and may include object recognition, object tracking, image retrieval, person recognition, scene understanding, spatial understanding, and/or image enhancement. Inference/prediction may be a technique of judging information and performing logical inference and prediction, and may include knowledge/probability-based inference, optimization prediction, preference-based planning, and/or recommendation. Knowledge representation may be a technique of automatically processing human experience information into knowledge data and includes knowledge construction (data generation/classification) and/or knowledge management (data utilization). Motion control may be a technique of controlling autonomous driving of a vehicle and movement of a robot, and may include movement control (navigation, collision, driving, etc.) and/or operation control (action control).

Examples relate to a method of safely controlling a vehicle in an autonomous driving system, in which the vehicle is linked to a server, and a device for performing the method, are described below with reference to the accompanying drawings.

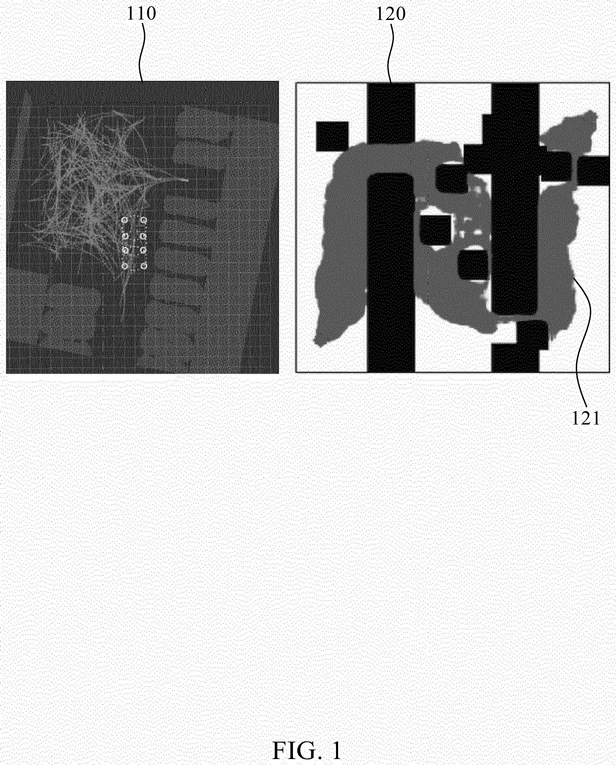

FIG. 1 illustrates an example of a method of generating a path for autonomous driving.

Referring to FIG. 1, an autonomous driving device according to an example may refer to a device capable of autonomously driving without a driver's intervention. An autonomous driving device may be implemented as a vehicle but is not necessarily limited thereto and may be implemented as various means of transportation, such as a two-wheeled vehicle, a robot, and/or a flying vehicle. For convenience of description, an implementation of a vehicle is described and illustrations and descriptions thereof are provided herein accordingly.

An autonomous driving device may drive in an autonomous mode according to a recognized driving environment. The driving environment may be recognized through one or more sensors attached on or installed in the autonomous driving device. For example, the one or more sensors may include cameras, Light Detection and Ranging (LiDAR) sensors, Radio Detection and Ranging (RADAR) sensors, and/or voice recognition sensors, but are not limited thereto. The driving environment may include a road, the condition of the road, the type of lane line, the presence or absence of a nearby vehicle, a distance to a nearby vehicle, the weather, the presence or absence of an obstacle, and/or the like, but is not limited thereto.

The autonomous driving device may recognize the driving environment and generate a driving path suitable for the driving environment. The autonomous driving device may control internal and external mechanical elements to follow the driving route. The autonomous driving device may periodically generate an autonomous driving path.

The autonomous driving device may preemptively plan a path in order to generate a driving path. Path planning may refer to a method of generating as many random paths as possible. The autonomous driving device may perform path planning based on a sampling-based algorithm. A representative sampling-based algorithm may be a Rapidly-exploring Random Tree Star (RRT*) algorithm.

Referring to a diagram 110, the RRT* algorithm may basically generate a path by growing trees from a starting point to a target point over the entire state space. Below, performing sampling on the entire state space may be referred to as uniform sampling. The RRT* algorithm may have the advantage of a robust operation against an issue of generating a high-dimensional and multi-constrained path. However, since a typical RRT* algorithm performs sampling on the entire space, the typical RRT* algorithm may have disadvantages, such as slow convergence speed, large memory requirements, and delay in generating a path in a narrow passage.

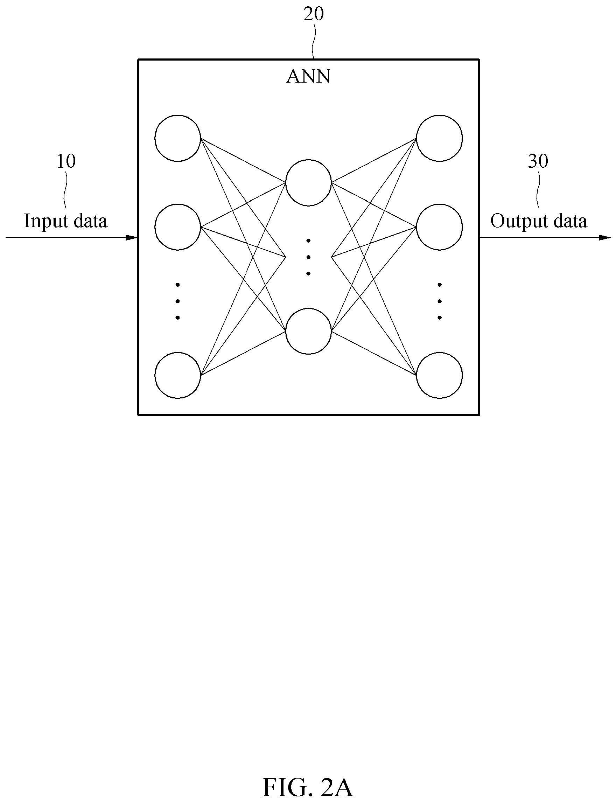

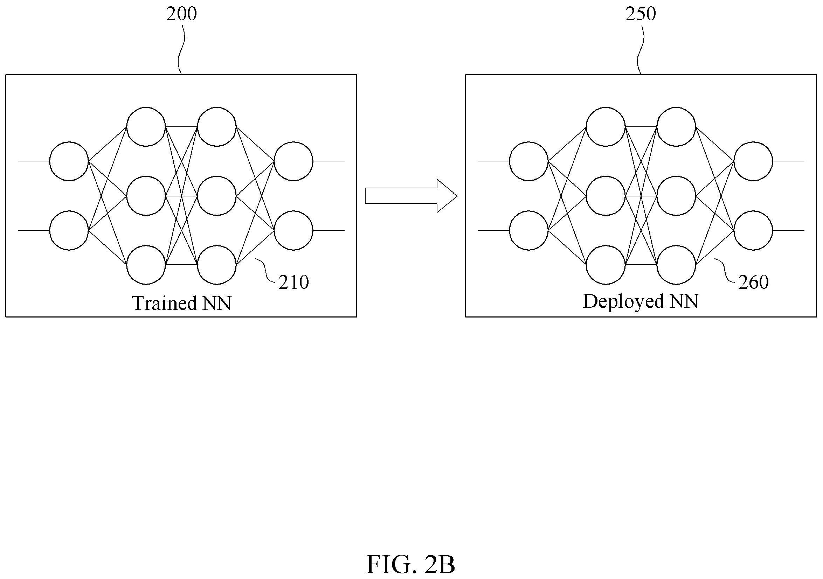

As a technological solution to such disadvantages in the typical RRT* algorithm, referring to a diagram 120, the autonomous driving device of one or more embodiments may preemptively determine an area 121 where an optimal path may exist, instead of performing sampling on the entire area, and may perform sampling on the area 121. Performing sampling on a partial area of a state space may be referred to as non-uniform sampling. The area 121 where the optimal path may exist may be referred to as a Feasible Path Distribution (FPD). An AI algorithm may be used to obtain (e.g., generate) an FPD. Before describing a method of generating a path according to an example, the AI algorithm is described with reference to FIGS. 2A and 2B.

FIG. 2A illustrates an example of a deep learning operation method using an artificial neural network (ANN).

An AI algorithm including deep learning or the like is characterized in that input data 10 is provided to an ANN and output data 30 produced through an operation, such as a convolution, is trained. The ANN may be a computational architecture obtained by modeling. In the ANN, nodes may be connected to each other and collectively operate to process input data. Various types of neural networks may include, for example, a convolutional neural network (CNN), a recurrent neural network (RNN), a deep belief network (DBN), or a restricted Boltzmann machine (RBM), but are not limited thereto. In a feed-forward neural network, nodes of the neural network may have links to other nodes. Such links may extend through the neural network in one direction, for example, in a forward direction.

FIG. 2A illustrates a structure in which the input data 10 is provided to an ANN and the output data 30 is produced through the ANN (e.g., a CNN 20) including one or more layers. The ANN may be, for example, a deep neural network including two or more layers.

The CNN 20 may be used to extract "features", for example, a border, a line, and/or a color from the input data 10. The CNN 20 may include a plurality of layers. Each of the layers may receive data, process data input to a corresponding layer, and generate data that is to be output from the corresponding layer. Data output from a layer may be a feature map generated by performing a convolution operation of an image or a feature map that is provided to the CNN 20 with a weight value of at least one filter. Initial layers of the CNN 20 may operate to extract features of a relatively low level, for example, edges and/or gradients, from an input. Subsequent layers of the CNN 20 may extract gradually more complex features, such as an eye and/or a nose in an image.

FIG. 2B illustrates an example of a training and inference method of an ANN model.

Referring to FIG. 2B, a system for generating an autonomous driving path may include a training device 200 and an inference device 250. The training device 200 may be a computing device having various processing functions, such as generating a neural network, training or learning the neural network, and/or retraining the neural network. For example, the training device 200 may be implemented as various devices, for example, a server device, a PC, and/or a mobile device.

The training device 200 may generate one or more trained neural networks 210 by repetitively training or learning a given initial neural network. The generating of the one or more trained neural networks 210 may refer to determining neural network parameters. These parameters may include various types of data, for example, input/output activations, weights, and/or biases that are input to and output from the neural network. When the neural network is repeatedly trained, the parameters of the neural network may be tuned to calculate a more accurate output for a given input.

The training device 200 may transmit the one or more trained neural networks 210 to the inference device 250. The inference device 250 may be included in, for example, a mobile device and/or an embedded device. The inference device 250 may be a piece of hardware dedicated for driving a neural network and may be an electronic device including at least one of a processor, a memory, an input/output (I/O) interface, a display, a communication interface, and/or a sensor.

The inference device 250 may include all digital devices that have a memory element and a microprocessor and have an operational capability, such as a tablet PC, a smartphone, a PC (e.g., a laptop computer), an AI speaker, a smart TV, a mobile phone, a navigation, a web pad, a personal digital assistant (PDA), and/or a workstation.

The inference device 250 may drive the one or more trained neural networks 210 without a change or may drive a neural network 260 in which the one or more trained neural networks 210 are processed (e.g., quantized). The inference device 250 for operating the neural network 260, which is processed, may be implemented in a device independent from the training device 200. However, there is no limitation thereto, and the inference device 250 may also be implemented in the same device as the training device 200.

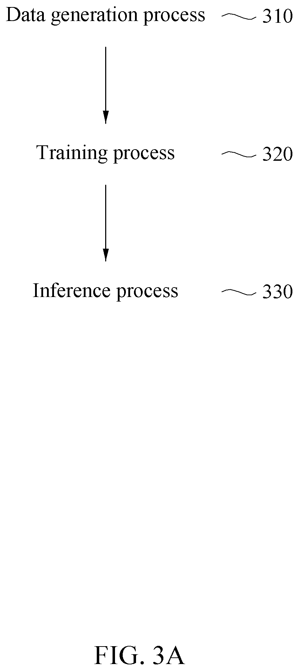

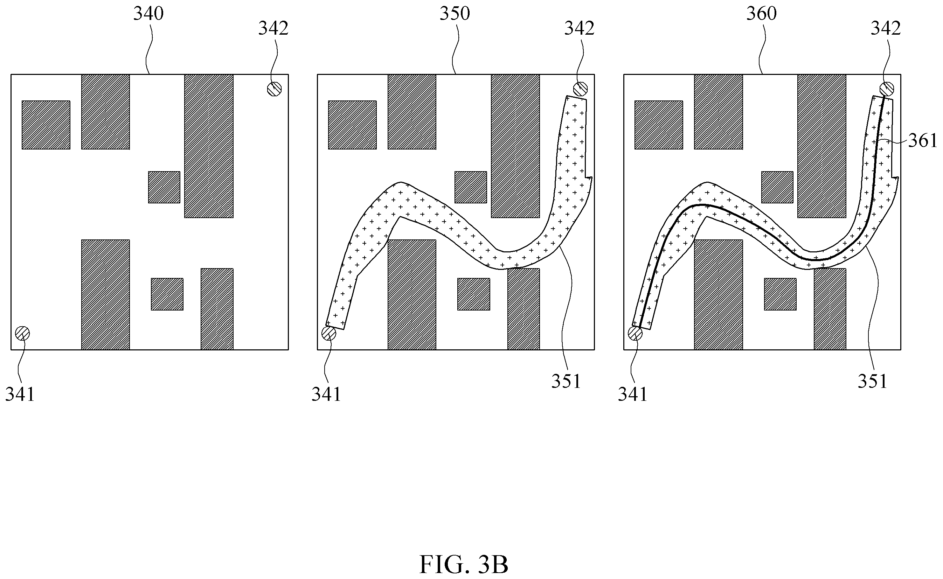

FIGS. 3A and 3B illustrate an example of a framework generating an autonomous driving path. The description given with reference to FIGS. 2A to 2B may be equally applied to FIGS. 3A and 3B.

Referring to FIG. 3A, a framework generating an autonomous driving path according to an example may include a data generation process 310, a training process 320, and an inference process 330.

In the training process 320, the training device 200 may train an ANN model to generate a Feasible Path Distribution (FPD) (e.g., the area 121 where the optimal path may exist in FIG. 1, as a non-limiting example). The ANN model according to an example may be referred to as a path distribution estimation model or a planner based on a generative model.

In the inference process 330, the inference device 250 may generate the FPD using the trained path distribution estimation model. The inference device 250 may be included or mounted in the autonomous driving device.

Referring to FIG. 3B, in the inference process 330, the inference device 250 may generate map information, departure information, and/or arrival information using values received from cameras and/or sensors, such as LIDAR sensors. The map information, the departure information, and the arrival information according to an example are referred to as initial information.

The map information according to an example may include an Occupancy Grid Map (OGM) 340. The OGM 340 may include a free space and an occupied space where each grid has a value between 0 and 1 and a path may be generated. As a non-limiting example, a grid corresponding to the free space may have a value of 0 and a grid corresponding to the occupied space may have a value of 1. The inference device 250 according to an example may estimate a local path for estimating a path near the autonomous driving device using the OGM 340.

The map information may include a high definition (HD) map. The inference device 250 according to an example may use the HD map to estimate a global path that finds an overall path from a starting point to a destination by using various pieces of information, such as lanes, roads, and/or crosswalks included in the HD map.

The departure information includes departure location information 341 of the autonomous driving device and/or information about the position of the autonomous driving device at the time of departure. The departure information according to an example may be referred to as start information.

The arrival information includes arrival location information 342 of the autonomous driving device and/or information about the position of the autonomous driving device at the time of arrival. The arrival information may be referred to as end information and arrival information at a target point.

Referring to a drawing 350, the inference device 250 according to an example may generate an FPD 351 based on the OGM 340, the departure location information 341, and the arrival location information 342. For example, the inference device 250 according to an example may input the OGM 340, the departure location information 341, and the arrival location information 342 to the trained path distribution estimation model to generate the FPD 351.

Referring to a drawing 360, the inference device 250 according to an example may determine a final path 361 based on the FPD 351.

In order to generate the final path 361, which is an optimal path, the FPD 351, which may cover various paths, may be generated.

A device for generating an autonomous driving path according to an example uses a planner ensemble in the data generation process 310 to generate the FPD 351 that may cover various paths.

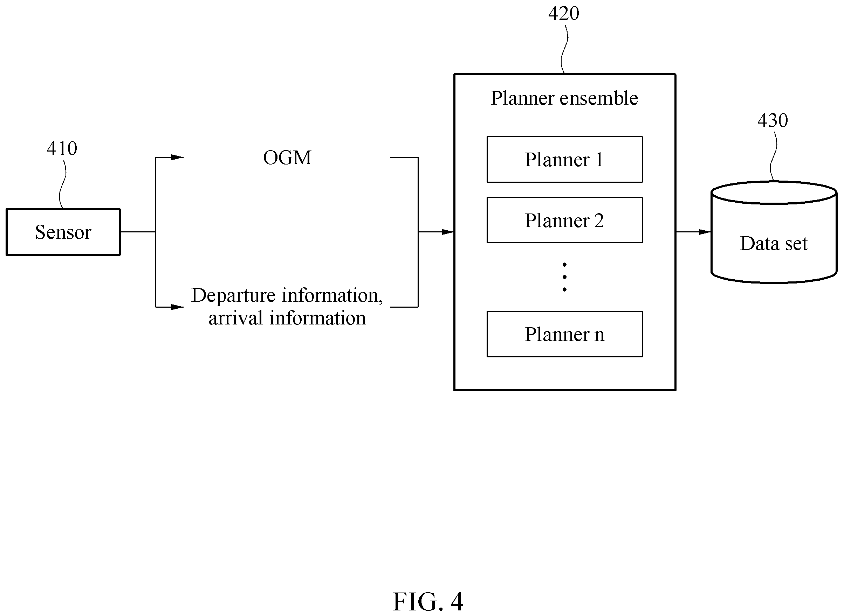

The data generation process 310 according to an example may refer to a process of generating training data to be used in the training process 320. The planner ensemble according to an example includes planners having different characteristics from each other and generates paths having different characteristics from each other, using the planners. Thereafter, in the training process 320, the FPD 351 may be generated by using the paths having different characteristics from each other as training data. Below, a non-limiting example method of generating training data using a planner ensemble is described in detail with reference to FIG. 4.

FIG. 4 illustrates an example of a method of generating training data using a planner ensemble. The description given with reference to FIGS. 2A to 3B may be equally applied to FIG. 4.

Referring to FIG. 4, the data generation process 310 according to an example may be performed by a data generation device. The data generation device according to an example may be the training device 200 or another device. For example, the data generation process 310 may be performed by another device and the training device 200 may receive training data generated through the data generation process 310 and perform training.

The data generation device according to an example may generate map information, departure information, and arrival information. For example, the data generation device according to an example may receive sensor data from a sensor 410 (e.g., one or more sensors such as cameras and/or LIDAR sensors) and may, based thereon, generate the map information, the departure information, and the arrival information. The data generation device may include the sensor 410 to perform sensing by itself to generate the sensor data or may receive the sensor data.

As described above, the map information according to an example may include an OGM. The departure information includes information about the departure location of an autonomous driving device and the position of the autonomous driving device at the time of departure (e.g., a departure position), and the arrival information includes information about the arrival location of the autonomous driving device and the position of the autonomous driving device at the time of arrival (e.g., an arrival position).

A path according to an example may include a parking path of the autonomous driving device. The parking path according to an example may refer to a path, in which the autonomous driving device may depart from a first location (e.g., the departure location) with a first position (e.g., the departure position) and park at a second location (e.g., the arrival location) with a second position (e.g., the arrival position) in the OGM. The position according to an example may include a direction in which the autonomous driving device faces on a map.

A planner ensemble 420 includes a plurality of planners. The plurality of planners included in the planner ensemble 420 have different characteristics from each other. According to an example, the planner ensemble 420 may be configured to cause the plurality of planners to generate paths that are complementary to each other.

A planner according to an example may generate a path using a sampling-based algorithm but is not limited thereto. For example, the planner according to an example may generate a path using various path estimation algorithms in addition to the sampling-based algorithm.

Each of the planners included in the planner ensemble 420 generates one or more paths using map information, departure information, and arrival information. For example, planner 1 may generate n₁ number of paths using an RRT* algorithm and planner 2 may generate n₂ number of paths using an fRRT* algorithm. In this case, the n₁ number of paths generated by planner 1 may have a different characteristic from the n₂ number of paths generated by planner 2.

The data generation device according to an example may store paths generated by each of the planners included in the planner ensemble 420 as a data set 430.

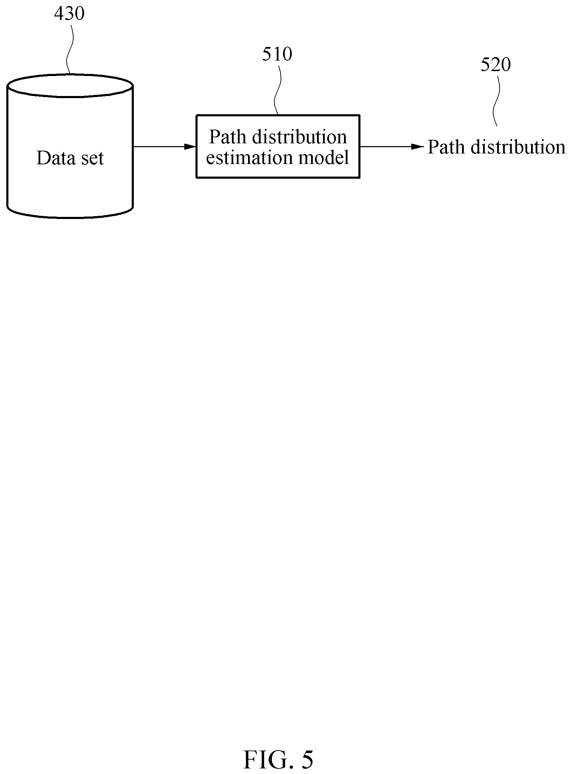

The training device 200 according to an example may train a path distribution estimation model by using the paths that have different characteristics from each other and are included in the data set 430 as training data. Below, a non-limiting example method of training a path distribution estimation model is described in detail with reference to FIG. 5.

FIG. 5 illustrates an example of a method of training a path distribution estimation model. The descriptions given with reference to FIGS. 2A to 4 may be equally applied to FIG. 5 and are incorporated herein by reference.

Referring to FIG. 5, the data training process 320 according to an example may be performed by the training device 200. The training device 200 according to an example may train a path distribution estimation model 510 by using the data set 430 generated by the data generation device.

For example, the training device 200 according to an example may train the path distribution estimation model 510 to output an FPD 520 corresponding to a plurality of paths.

The path distribution estimation model 510 according to an example may include a path distribution estimation model based on a generative model. For example, the path distribution estimation model 510 may be a path distribution estimation model based on Generative Adversarial Networks (GAN).

The training device 200 according to an example may train the path distribution estimation model 510 by using the paths included in the data set 430 as ground-truth.

For example, the training device 200 according to an example may train the path distribution estimation model 510 to minimize a loss function determined based on a difference between the plurality of paths included in the data set 430 and a test path generated by inputting initial information to the path distribution estimation model 510.

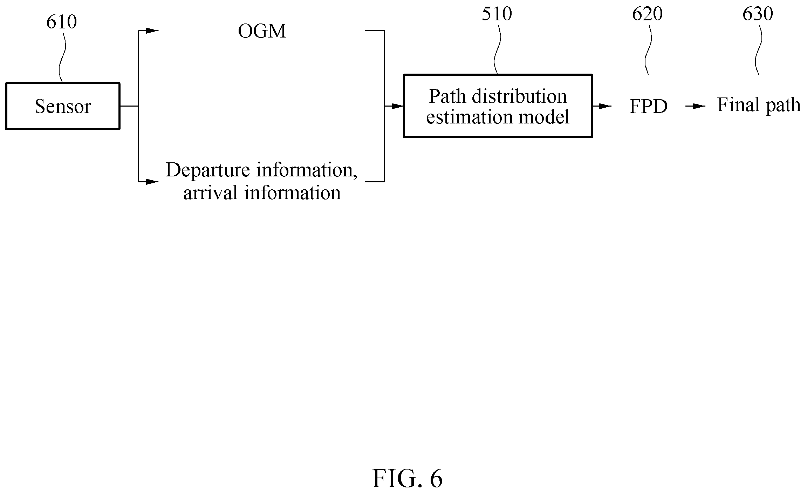

The inference device 250 according to an example may estimate an FPD using the path distribution estimation model 510 trained by the training device 200 and may use an estimated FPD to determine a final path. Below, a non-limiting example method of determining a path is described with reference to FIG. 6.

FIG. 6 illustrates an example of a method of determining a path.

The descriptions given with reference to FIGS. 2A to 5 may be equally applied to FIG. 6 and are incorporated herein by reference. Referring to FIG. 6, the inference device 250 according to an example may generate initial information including at least one of map information, departure information, and arrival information.

For example, the inference device 250 according to an example may receive sensor data from a sensor 610 (e.g., one or more sensors such as cameras and/or LIDAR sensors) and may, based thereon, generate the map information, the departure information, and the arrival information. A training device may include the sensor 610 to perform sensing by itself to generate the sensor data or may receive the sensor data.

The inference device 250 according to an example may further include a positioning module. When the inference device 250 according to an example estimates a global path, the inference device 250 may determine the current location of an autonomous driving device on an HD map, based on positioning data determined from the positioning module.

The inference device 250 according to an example may generate an FPD 620 corresponding to the initial information by inputting the initial information to the path distribution estimation model 510, which is trained.

The inference device 250 according to an example may determine a final path 630 by performing statistical processing on the FPD 620. For example, the inference device 250 may determine a path corresponding to an average value of FPDs as the final path 630.

Alternatively or additionally, the inference device 250 according to an example may determine the final path 630 by inputting the FPD 620 to a sampling-based planner. For example, the inference device 250 may determine the final path 630 by performing, on the FPD 620, a sampling based on the RRT* algorithm.

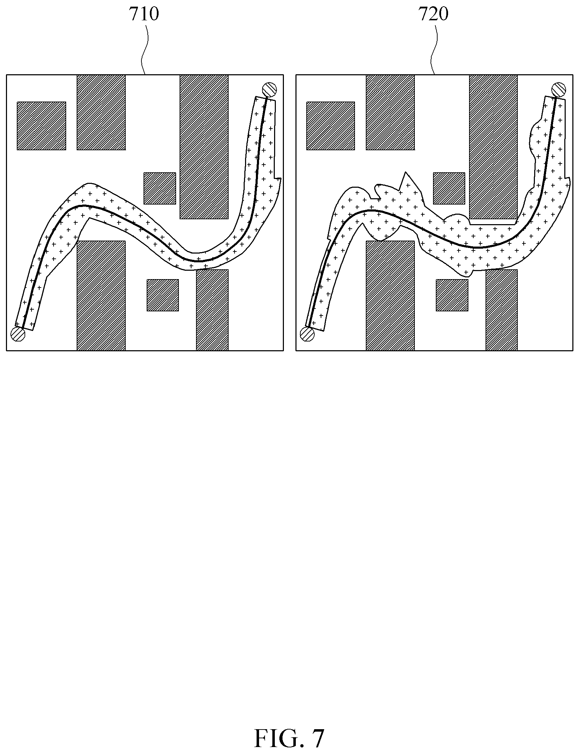

FIG. 7 illustrates an example of an effect of a method of estimating a path distribution using a planner ensemble.

Referring to a drawing 710 of FIG. 7, as a typical learning device may not use a planner ensemble, a path distribution estimation model of the typical learning device may be trained by using only paths according to characteristics of a specific planner. Accordingly, an FPD generated from the path distribution estimation model may also have only specific characteristics.

In contrast, referring to a drawing 720, as a learning device of one or more embodiments may use a planner ensemble, the path distribution estimation model of the learning device of one or more embodiments may be trained by using various types of paths generated from planners different from each other and having various characteristics. Accordingly, the path distribution estimation model may generate an FPD that may include various paths.

Therefore, since an autonomous driving device according to an example generates a final path from the FPD that may include various paths, an inference device of one or more embodiments may generate a path that is closer to an optimal path than a path generated by a typical inference device.

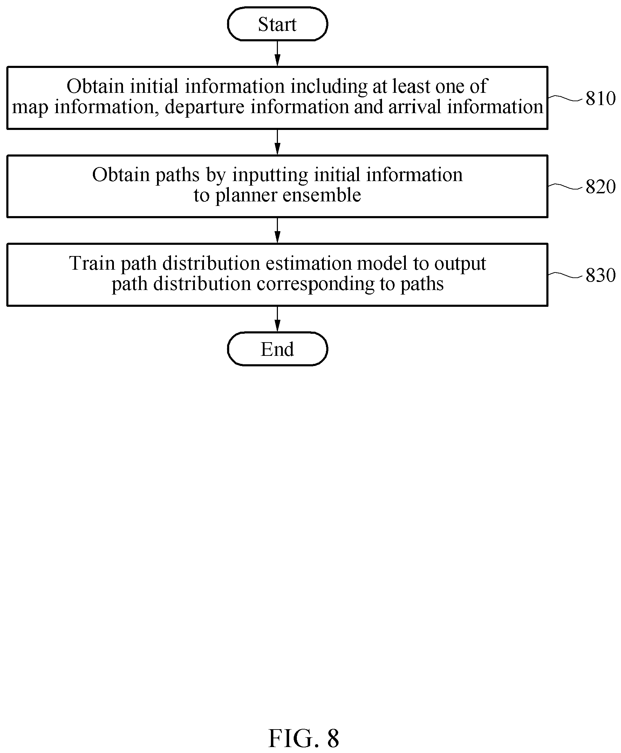

FIG. 8 illustrates an example of a method of training a path distribution estimation model. The descriptions given with reference to FIGS. 2A to 7 may be equally applied to FIG. 8 and are incorporated herein by reference.

For convenience of description, it is described that operations 810 through 830 are performed by the learning device 200 described with reference to FIG. 2B. However, operations 810 and 830 may be performed by another suitable electronic device or in a suitable system.

Furthermore, the operations 810 through 830 may be performed in the shown order and manner. However, the order of some operations may be changed. Further, at least two of the operations 810 through 830 may be performed in parallel or simultaneously.

In operation 810, the training device 200 according to an example may generate initial information including at least one of map information, departure information, and arrival information. The training device 200 according to an example may include the data generation device described above.

In operation 820, the training device 200 according to an example may generate a plurality of paths by inputting the initial information to a planner ensemble. The planner ensemble according to an example may include a plurality of planners having different characteristics from each other, and the training device 200 may input the initial information to each of the planners to generate the paths corresponding to the planners, respectively.

In operation 830, the training device 200 according to an example may train a path distribution estimation model to output a path distribution corresponding to the paths. The training device 200 according to an example may train the path distribution estimation model in order to minimize a loss function determined based on a difference between the plurality of paths and a test path generated by inputting the initial information to the path distribution estimation model.

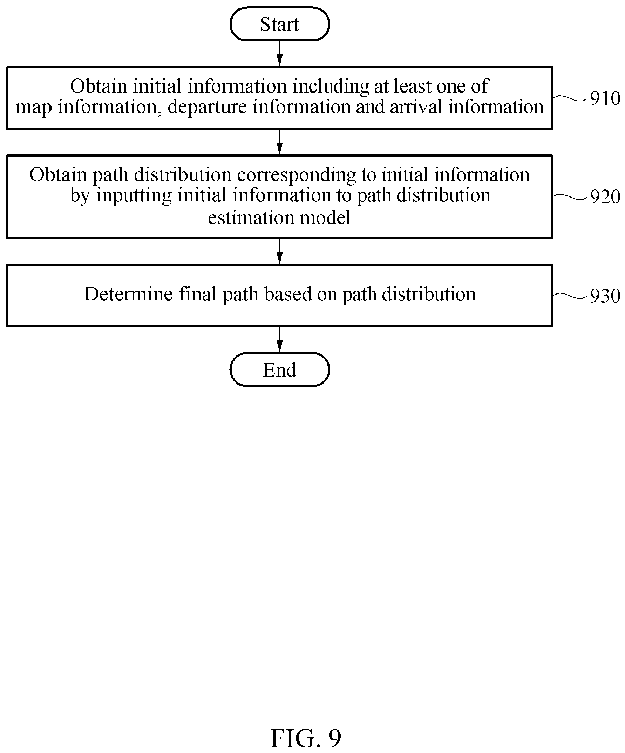

FIG. 9 illustrates an example of a method of estimating a path distribution. The descriptions given with reference to FIGS. 2A to 8 may be equally applied to FIG. 9 and are incorporated herein by reference.

For convenience of description, it is described that operations 910 through 930 are performed by the inference device 250 described with reference to FIG. 2B. However, operations 910 and 930 may be performed by another suitable electronic device or in a suitable system.

Furthermore, operations 910 through 930 may be performed in the shown order and manner. However, the order of some operations may be changed. Further, at least two of the operations 910 through 930 may be performed in parallel or simultaneously.

In operation 910, the inference device 250 according to an example may generate initial information including at least one of map information, departure information, and arrival information.

In operation 920, the inference device 250 according to an example may generate a path distribution corresponding to the initial information by inputting the initial information to a path distribution estimation model. The path distribution estimation model may be a path distribution estimation model trained through operations 810 to 830.

In operation 930, the inference device 250 according to an example may determine a final path based on the path distribution. The inference device 250 according to an example may determine a final path by performing statistical processing on the path distribution or may determine the final path by inputting the path distribution to a sampling-based planner.

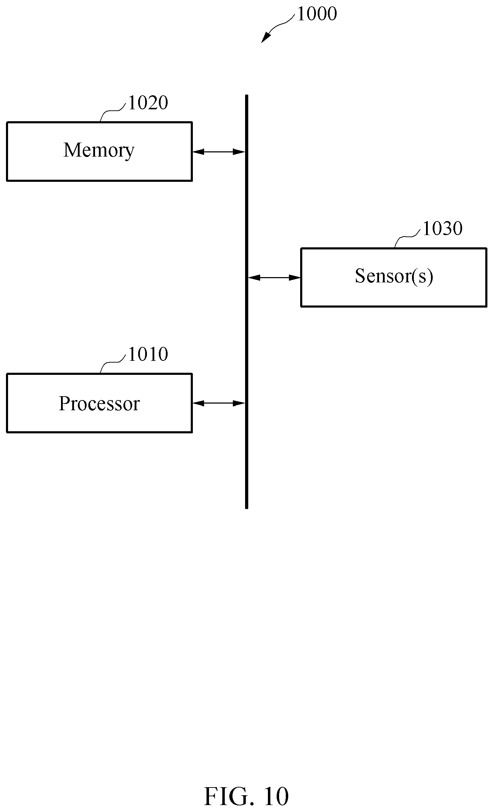

FIG. 10 illustrates an example of a configuration of a training device.

Referring to FIG. 10, a training device 1000 (e.g., an electronic device) may include a processor 1010 (e.g., one or more processors), a memory 1020, and a sensor 1030 (e.g., one or more sensors). The description given with reference to FIGS. 2A to 9 may be equally applied to FIG. 10 and are incorporated herein by reference. For example, the training device 200 described with reference to FIG. 2B may be the training device 1000 of FIG. 10.

The memory 1020 may store computer-readable instructions. When the computer-readable instructions stored in the memory 1020 are executed by the processor 1010, the processor 1010 may process operations defined by the computer-readable instructions. For example, the memory 1020 may store instructions that, when executed by the processor 1010, configure the processor 1010 to perform any one of, any combination of any two or more of, or all operations and methods described above with respect to FIGS. 1 to 9. The memory 1020 may include, for example, Random Access Memory (RAM), Dynamic Random Access Memory (DRAM), Static Random Access Memory (SRAM), or other types of non-volatile memory. The memory 1020 may store a pre-trained ANN model.

The one or more sensors 1030 may include cameras, LiDAR sensors, RADAR sensors, and voice recognition sensors, but are not limited thereto. Since one, with an understanding of the present disclosure, may intuitively infer a function of each sensor from its name, a detailed description thereof is omitted.

The one or more processors 1010 may control the overall operation of the training device 1000. The processor 1010 may be a hardware-implemented device having a circuit that is physically structured to execute desired operations. The desired operations may include instructions or code in a program. The hardware-implemented device may include, for example, a microprocessor, a Central Processing Unit (CPU), a Graphics Processing Unit (GPU), a processor core, a multi-core processor, a multiprocessor, an Application-Specific Integrated Circuit (ASIC), a Field-Programmable Gate Array (FPGA), and a Network Processor Unit (NPU).

The processor 1010 may control the training device 1000 by executing instructions and functions to be executed by the training device 1000.

Under control by the processor 1010 according to an example, the training device 1000 may generate initial information including at least one of map information, departure information, and arrival information, input the initial information to a planner ensemble to generate a plurality of paths, and train a path distribution estimation model to output a path distribution corresponding to the plurality of paths.

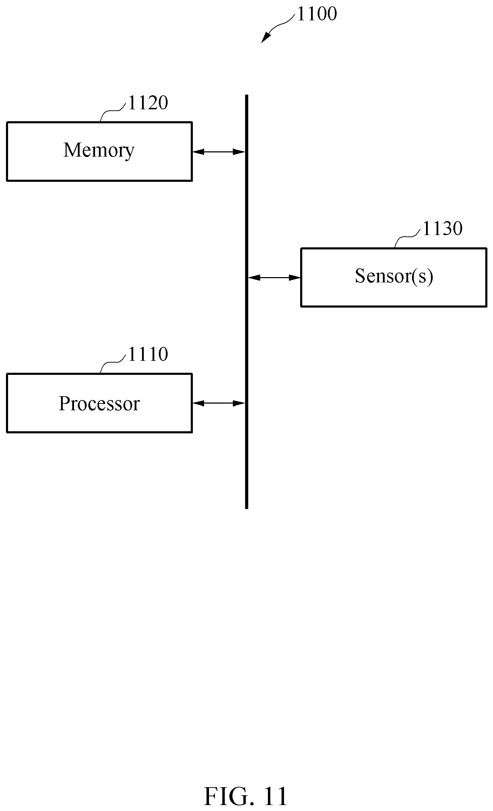

FIG. 11 illustrates an example of a configuration of an inference device.

Referring to FIG. 11, an inference device 1100 (e.g., an electronic device) may include a processor 1110 (e.g., one or more processors), a memory 1120, and a sensor 1130 (e.g., one or more sensors). The description given with reference to FIGS. 2A to 9 may be equally applied to FIG. 11. For example, the inference device 250 described with reference to FIG. 2B may be the inference device 1100 of FIG. 11. Inf an example, the inference device 1100 may be or include the training device 1000 of FIG. 10.

The memory 1120 may store computer-readable instructions. When the computer-readable instructions stored in the memory 1120 are executed by the processor 1110, the processor 1110 may process operations defined by the computer-readable instructions. For example, the memory 1120 may store instructions that, when executed by the processor 1110, configure the processor 1110 to perform any one of, any combination of any two or more of, or all operations and methods described above with respect to FIGS. 1 to 10. The memory 1120 may include, for example, RAM, DRAM, SRAM, or other types of non-volatile memory. The memory 1120 may store a pre-trained ANN model.

For example, the one or more sensors 1130 may include LiDAR, RADAR, and voice recognition sensors, but are not limited thereto. Since one, with an understanding of the present disclosure, may intuitively infer a function of each sensor from its name, a detailed description thereof is omitted.

The one or more processors 1110 may control the overall operation of the inference device 1100. The processor 1110 may be a hardware-implemented device having a circuit that is physically structured to execute desired operations. The desired operations may include instructions or code in a program. The hardware-implemented device may include, for example, a microprocessor, a CPU, a GPU, a processor core, a multi-core processor, a multiprocessor, an ASIC, an FPGA, and an NPU.

The processor 1110 may control the inference device 1100 by executing instructions and functions to be executed by the inference device 1100.

Under control by the processor 1110 according to an example, the inference device 1100 may generate initial information including at least one of map information, departure information, and arrival information, input the initial information to a path distribution estimation model to generate a path distribution corresponding to the initial information, and determine a final path based on the path distribution.

The sensors, training devices, processors, memories, inference devices, sensor 410, sensor 610, training device 1000, processor 1010, memory 1020, sensor 1030, inference device 1100, processor 1110, memory 1120, sensor 1130, and other apparatuses, devices, and components described and disclosed herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magnetooptical data storage devices, optical data storage devices, hard disks, solid-state disks , and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

## Claims

1. A processor-implemented method, the method comprising:
generating (810) initial information comprising map information, departure information, and arrival information;
wherein the departure information comprises either one or both of departure location information and departure position information, and the arrival information comprises either one or both of arrival location information and arrival position information;
generating (820) a plurality of paths by inputting the initial information to a planner ensemble;
wherein the planner ensemble comprises a plurality of planners having different characteristics from each other, and wherein the generating of the plurality of paths comprises generating the plurality of paths corresponding to the plurality of planners, respectively, by inputting the initial information to each of the plurality of planners; and
training (830) a path distribution estimation model to output a path distribution corresponding to the plurality of paths.

2. The method of claim 1, wherein the training comprises training the path distribution estimation model to minimize a loss function determined based on a difference between the plurality of paths and a test path generated by inputting the initial information to the path distribution estimation model.

3. The method of any one of claims 1-2, wherein the plurality of planners comprises a sampling-based planner.

4. The method of any one of claims 1-3, wherein the path distribution estimation model comprises a path distribution estimation model based on a generative model.

5. The method of any one of claims 1-4, wherein
the map information comprises an occupancy grid map.

6. A non-transitory computer-readable storage medium storing instructions that, when executed by a processor, configure the processor to perform the method of any one of claims 1-5.

7. An electronic device comprising:
a processor (1010) configured to:
generate initial information comprising map information, departure information, and arrival information;
wherein the departure information comprises either one or both of departure location information (341) and departure position information, and the arrival information comprises either one or both of arrival location information (342) and arrival position information;
generate a plurality of paths by inputting the initial information to a planner ensemble (420);
wherein the planner ensemble (420) comprises a plurality of planners having different characteristics from each other, and for the generating of the plurality of paths, the processor (1010) is configured to generate the plurality of paths corresponding to the plurality of planners, respectively, by inputting the initial information to each of the plurality of planners; and
train a path distribution estimation model to output a path distribution (351) corresponding to the plurality of paths.

8. The electronic device of claim 7, wherein, for the training, the processor (1010) is configured to train the path distribution estimation model to minimize a loss function determined based on a difference between the plurality of paths and a test path generated by inputting the initial information to the path distribution estimation model.

9. The electronic device of any one of claims 7-8, wherein
the plurality of planners comprises a sampling-based planner, and
the path distribution estimation model comprises a path distribution estimation model based on a generative model.

10. The electronic device of any one of claims 7-9, wherein
the map information comprises an occupancy grid map (340).

## Patentansprüche

1. Prozessorimplementiertes Verfahren, wobei das Verfahren Folgendes umfasst:
Erzeugen (810) von Anfangsinformationen, die Karteninformationen, Abfahrtsinformationen und Ankunftsinformationen umfassen, wobei die Abfahrtsinformationen entweder Abfahrtsstandortinformationen oder Abfahrtspositionsinformationen oder beides umfassen und die Ankunftsinformationen entweder Ankunftsstandortinformationen oder Ankunftspositionsinformationen oder beides umfassen;
Erzeugen (820) einer Vielzahl von Pfaden durch Eingeben der Anfangsinformationen in ein Planerensemble, wobei das Planerensemble eine Vielzahl von Planern mit unterschiedlichen Eigenschaften umfasst, und wobei das Erzeugen der Vielzahl von Pfaden das Erzeugen der Vielzahl von Pfaden entsprechend der Vielzahl von Planern umfasst, indem die Anfangsinformationen in jeden der Vielzahl von Planern eingegeben werden; und
Trainieren (830) eines Pfadverteilungsschätzungsmodells, um eine Pfadverteilung entsprechend der Vielzahl von Pfaden auszugeben.

2. Verfahren nach Anspruch 1, wobei das Trainieren das Trainieren des Pfadverteilungsschätzungsmodells umfasst, um eine Verlustfunktion zu minimieren, die basierend auf einer Differenz zwischen der Vielzahl von Pfaden und einem Testpfad bestimmt wird, der durch Eingeben der Anfangsinformationen in das Pfadverteilungsschätzungsmodell erzeugt wird.

3. Verfahren nach einem der Ansprüche 1 und 2, wobei die Vielzahl von Planern einen abtastbasierten Planer umfasst.

4. Verfahren nach einem der Ansprüche 1 bis 3, wobei das Pfadverteilungsschätzungsmodell ein Pfadverteilungsschätzungsmodell umfasst, das auf einem generativen Modell basiert.

5. Verfahren nach einem der Ansprüche 1 bis 4, wobei die Karteninformationen eine Belegungsrasterkarte umfassen.

6. Übergangsloses, computerlesbares Speichermedium, in dem Anweisungen gespeichert sind, die, wenn sie von einem Prozessor ausgeführt werden, bewirken, dass der Prozessor das Verfahren nach einem der Ansprüche 1 bis 5 durchführt.

7. Elektronische Vorrichtung, die Folgendes umfasst:
einen Prozessor (1010), der zu Folgendem konfiguriert ist:
Erzeugen von Anfangsinformationen, die Karteninformationen, Abfahrtsinformationen und Ankunftsinformationen umfassen, wobei die Abfahrtsinformationen entweder Abfahrtsstandortinformationen (341) oder Abfahrtspositionsinformationen oder beides umfassen und die Ankunftsinformationen entweder Ankunftsstandortinformationen (342) oder Ankunftspositionsinformationen oder beides umfassen;
Erzeugen einer Vielzahl von Pfaden durch Eingeben der Anfangsinformationen in ein Planerensemble (420), wobei das Planerensemble (420) eine Vielzahl von Planem mit unterschiedlichen Eigenschaften umfasst, und wobei zum Erzeugen der Vielzahl von Pfaden der Prozessor (1010) konfiguriert ist zum Erzeugen der Vielzahl von Pfaden entsprechend der Vielzahl von Planem umfasst, indem die Anfangsinformationen in jeden der Vielzahl von Planem eingegeben werden; und
Trainieren eines Pfadverteilungsschätzungsmodells, damit es eine Pfadverteilung (351) entsprechend der Vielzahl von Pfaden ausgibt.

8. Elektronische Vorrichtung nach Anspruch 7, wobei zum Trainieren der Prozessor (1010) konfiguriert ist zum Trainieren des Pfadverteilungsschätzungsmodells, um eine Verlustfunktion zu minimieren, die basierend auf einer Differenz zwischen der Vielzahl von Pfaden und einem Testpfad bestimmt wird, der durch Eingeben der Anfangsinformationen in das Pfadverteilungsschätzungsmodell erzeugt wird.

9. Elektronische Vorrichtung nach einem der Ansprüche 7 bis 8, wobei
die Vielzahl von Planem einen abtastbasierten Planer umfasst, und
das Pfadverteilungsschätzungsmodell ein Pfadverteilungsschätzungsmodell umfasst, das auf einem generativen Modell basiert.

10. Elektronische Vorrichtung nach einem der Ansprüche 7 bis 9, wobei die Karteninformationen eine Belegungsrasterkarte (340) umfassen.

## Revendications

1. Procédé mis en œuvre par un processeur, comprenant les étapes consistant à :
générer (810) des informations initiales comprenant des informations cartographiques, des informations de départ et des informations d'arrivée, les informations de départ comprenant des informations de lieu de départ et/ou des informations de position de départ, et les informations d'arrivée comprenant des informations de lieu d'arrivée et/ou des informations de position d'arrivée, générer (820) une pluralité de trajets à la suite de l'entrée des informations initiales dans un ensemble de planificateurs, l'ensemble de planificateurs comprenant une pluralité de planificateurs ayant des caractéristiques différentes les uns des autres, et la génération de la pluralité de trajets comprenant la génération de la pluralité de trajets en correspondance avec la pluralité de planificateurs respectifs à la suite de l'entrée des informations initiales dans chacun des planificateurs, et
entraîner (830) un modèle d'estimation de distribution de trajets à produire une distribution de trajets correspondant à la pluralité de trajets.

2. Procédé selon la revendication 1, dans lequel l'entraînement comprend l'entraînement du modèle d'estimation de distribution de trajets pour réduire à un minimum une fonction de perte déterminée compte tenu d'une différence entre la pluralité de trajets et un trajet d'essai généré à la suite de l'entrée des informations initiales dans le modèle d'estimation de distribution de trajets.

3. Procédé selon l'une quelconque des revendications 1 et 2, dans lequel la pluralité de planificateurs comprend un planificateur reposant sur un échantillonnage.

4. Procédé selon l'une quelconque des revendications 1 à 3, dans lequel le modèle d'estimation de distribution de trajets comprend un modèle d'estimation de distribution de trajets reposant sur un modèle génératif.

5. Procédé selon l'une quelconque des revendications 1 à 4, dans lequel les informations cartographiques comprennent une carte à grille d'occupation.

6. Support de stockage non transitoire lisible par ordinateur sur lequel sont stockées des instructions qui, lorsqu'elles sont exécutées par un processeur, configurent le processeur de façon qu'il mette en œuvre le procédé selon l'une quelconque des revendications 1 à 5.

7. Dispositif électronique comprenant :
un processeur (1010) configuré pour :
générer des informations initiales comprenant des informations cartographiques, des informations de départ et des informations d'arrivée, les informations de départ comprenant des informations de lieu de départ (341) et/ou des informations de position de départ, et les informations d'arrivée comprenant des informations de lieu d'arrivée (342) et/ou des informations de position d'arrivée,
générer une pluralité de trajets à la suite de l'entrée des informations initiales dans un ensemble de planificateurs (420), l'ensemble de planificateurs (420) comprenant une pluralité de planificateurs ayant des caractéristiques différentes les uns des autres, et, pour la génération de la pluralité de trajets, le processeur (1010) étant configuré pour générer la pluralité de trajets en correspondance avec la pluralité de planificateurs respectifs à la suite de l'entrée des informations initiales dans chacun des planificateurs, et
entraîner un modèle d'estimation de distribution de trajets à produire une distribution de trajets (351) correspondant à la pluralité de trajets.

8. Dispositif électronique selon la revendication 7, dans lequel, pour l'entraînement, le processeur (1010) est configuré pour entraîner le modèle d'estimation de distribution de trajets afin de réduire à un minimum une fonction de perte déterminée compte tenu d'une différence entre la pluralité de trajets et un trajet d'essai généré à la suite de l'entrée des informations initiales dans le modèle d'estimation de distribution de trajets.

9. Dispositif électronique selon l'une quelconque des revendications 7 et 8, dans lequel
la pluralité de planificateurs comprend un planificateur reposant sur l'échantillonnage, et
le modèle d'estimation de distribution de trajets comprend un modèle d'estimation de distribution de trajets reposant sur un modèle génératif.

10. Dispositif électronique selon l'une quelconque des revendications 7 à 9, dans lequel les informations cartographiques comprennent une carte à grille d'occupation (340).
